Europäisches Patentamt

European Patent Office

Office européen des brevets

(11) Publication number: **0 107 952**
**B1**

(12) **EUROPEAN PATENT SPECIFICATION**

(45) Date of publication of patent specification: **01.06.88**

(21) Application number: **83306322.5**

(22) Date of filing: **18.10.83**

(51) Int. Cl.⁴: **G 06 F 9/22,** G 06 F 9/26

(54) **Information processing apparatus and its instruction control system.**

(30) Priority: **18.10.82 JP 182313/82**
**20.07.83 JP 132311/83**

(43) Date of publication of application:
**09.05.84 Bulletin 84/19**

(45) Publication of the grant of the patent:
**01.06.88 Bulletin 88/22**

(84) Designated Contracting States:
**DE FR GB**

(56) References cited:
**US-A-3 900 835**
**US-A-4 008 462**

**PATENTS ABSTRACTS OF JAPAN, vol. 6, no.**
**209 (P-150)1087r, 21st October 1982**

(73) Proprietor: **NEC CORPORATION**
**33-1, Shiba 5-chome, Minato-ku**
**Tokyo 108 (JP)**

(72) Inventor: **Sato, Yoshikuni**
**c/o NEC Corporation 33-1 Shiba 5-chome**
**Minato-ku Tokyo 108 (JP)**

(74) Representative: **Orchard, Oliver John**
**JOHN ORCHARD & CO. Staple Inn Buildings**
**North High Holborn**
**London WC1V 7PZ (GB)**

Courier Press, Leamington Spa, England.

## Description

Background of the invention

This invention relates to an information processing apparatus and its instruction control system, and more particularly to an instruction control processor in which instructions are derived from a program memory and a program is executed according to a sequence of the derived instructions and an instruction control system used therein.

Description of the prior art

Microprogramming is a computer architecture well known in an instruction control system and is a most useful interface between hardware and software. In this system, one macro instruction is divided into a plurality of small steps according to a processing flow, and each step is described as a micro instruction, respectively. A group of micro instructions is called a microprogram and a memory storing the micro instructions is called a microprogram memory. The microprogramming technique is generally used as a firmware.

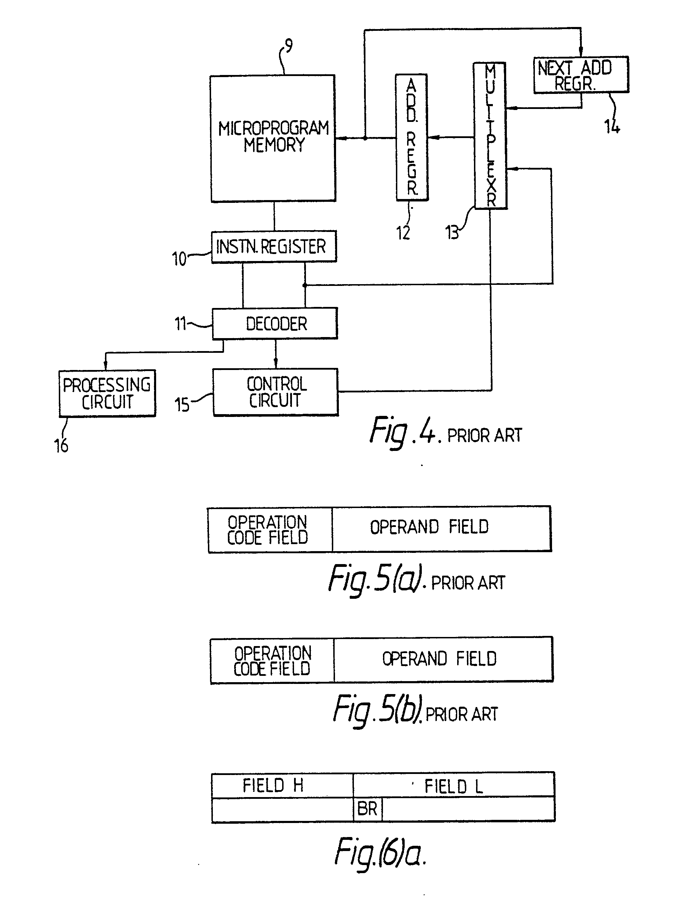

Two types of a micro instruction have been proposed in the prior art; one is a horizontal type and the other is a vertical type. Examples of vertical type micro instruction operations are those described in US—A—3 900 835 and US—A—4 008 462. Further arrangements known to the applicants are described below particularly in relation to Figures 4 and 5. The horizontal type micro instruction consists of a plurality of bits, each of which corresponds one by one to each of a plurality of control gates in an arithmetic processing unit and a process flow control unit, and directly controls a data path (e.g., a gate of a register). There are two styles of the horizontal type instuctions. One is a direct control in which the bit itself is a micro operation signal, and the other is an encoded control in which one micro instruction is divided into a plurality of fields, each of which is coupled to a respective decoder and the decoded outputs are used as the micro operation signals. However, in a high level computer having many control gates, a large number of bits per micro instruction are required. Therefore, the horizontal type micro instruction control system is effective in high speed processing but is of less practical use.

The verical type micro instruction is divided into an operation field setting an operation code and at least one operand field setting an operand. The operation code is used to designate a processing operation and is applied to a decoder. The decoded outputs are used as micro operation signals. Therefore, since the number of bits per micro instruction becomes small, the vertical type of micro instruction is of more practical use than the horizontal type. However, at least one decoding step is always required in the execution of a micro instruction. Therefore, there is a short coming, in that the processing speed is comparatively slow. For example, as one of the micro instructions a jump (or branch) instruction is employed. The jump instruction is designed to change a processing flow and is used especially to control an address jump statement. A jump code for designating a jump operation is set in an operation field, and a jumping address is set in an operand field. After the jump instruction is read out of a program memory (ROM) and is loaded into an instruction register, the jump code is firstly decoded by a decoder coupled to the operation field, and secondly the jumping address is sent to a program memory address register according to at least one decoded output (a jump operation control signal) produced by the decoder. Generally, since a next address produced by a sequential address generator is set in the program memory address register, an address controller must inhibit the next address under the jump operation. Therefore, a multiplexer is provided at a previous stage of the address register, and the jumping address is selected by the multiplexer depending on the jump operation control signal and then transferred to the address register.

As described above, an execution of the jump instruction requires both a decoding operation and a multiplexing operation. Therefore the processing speed of the vertical type instruction still falls. In addition to this short coming, when the jump instruction is executed, a processing unit (such as an arithmetic unit and an information transfer unit) except for a processing flow control unit cannot be used, that is the processing unit is compulsorily held in an idle state. Therefore, the vertical type of prior art arrangement has the short coming that the processing efficiency of the processing unit is very poor.

These short comings cannot be solved, even if an instruction look-ahead technique is adopted, unless the decoding operation are omitted. Furthermore, it is clear that the same short comings will occur in the case in which a micro instruction consists of a plurality of words. Particularly, the decoding operation limits the processing speed of not only the jump instruction, but also other micro instructions. Moreover, micro instructions, which do not use the processing unit, other than the jump instruction, also provide an idle state for the processing unit.

A feature of the present invention as claimed in claims 1 and 2 is the provision of an information processing apparatus, one function of which is to execute an instruction at a higher speed than previously.

Another feature of the present invention as claimed in claim 1 and 2 is the provision of an information processing apparatus having a processing unit with an improved processing efficiency.

A further feature is the provision of a microprogramming system with an improved processing procedure and yet another feature is the provision of a microprocessor in which both a first type of micro instruction for a processing unit and a second type of micro instruction for a processing flow-control unit can be executed with overlap (claim 1) or simultaneously (claim 2).

## Summary of the invention

An instruction control system will be described below which includes two instruction formats. One format is a first type instruction, which has an operation field in which an operation code for controlling a processing circuit is set, an operand field in which an operand code is used by the processing unit, and a control field in which a control code for controlling a processing flow control circuit is set. The other type is the second type of instruction having a data code for designating a program flow. According to a first embodiment of the present invention the first type of instruction is accessed as a preceding instruction, while the second type of instruction is accessed as a following instruction. The first type of instruction is firstly decoded and is transferred to the processing circuit. In this cycle, the control code of the first type of instruction is simultaneously decoded. The data code of the second type of instruction is transferred to the processing flow control circuit, according to the decoded signal of the control code. The control code and the data code are a pair of one instruction (for example, a jump instruction or a branch instruction) for controlling the sequence of a program flow, and are independently set in the first type of instruction and in the second type of instruction, respectively. The control code set in a preceding instruction (that is, the first type of instruction) is decoded within the operation code decoding cycle of the preceding instruction.

It will be understood, from the embodiment to be described that since an independent decoding cycle for the control code is not required, a higher speed of processing can be achieved. Furthermore, when the second type of instruction includes another operation code, this operation code can be simultaneously executed with the processing flow control operation. Therefore a higher processing efficiency can be established.

In the case in which the control code is a jump (or branch) code and the data code is a jumping (or branch) address, the jump code is decoded in a preceding instruction decoding cycle, so that the jumping address is immediately transferred to the processing flow control circuit, such as an address register.

According to a second embodiment of the present invention the first type of instruction and the second type of instruction may be simultaneously read out of an instruction memory. In this case, these two instructions can be executed in the same machine cycle at a high speed.

## Brief description of the drawings

A prior art arrangement will now be described together with embodiments of the invention, by way of example, with reference to the accompanying drawings in which:—

Fig. 1 is a block diagram of a prior art data processor with horizontal type microprogramming;

Fig. 2 is a block diagram of a prior art data processor with vertical type microprogramming;

Fig. 3(a) is a block diagram of a prior art data processor which controls a jump (branch) instruction;

Fig. 3(b) is a jump instruction format of a prior art vertical type microprogramming;

Fig. 4 is a block diagram of a prior art data processor with a vertical type microprogramming;

Fig. 5(a) is a prior art control instruction format;

Fig. 5(b) is a prior art jump instruction format;

Fig. 6(a) is a control instruction format in accordance with a first embodiment of the present invention;

Fig. 6(b) is a jump instruction format in accordance with a first embodiment of the present invention;

Fig. 7 is a block diagram of a part of a data processor in accordance with a first embodiment, of the present invention;

Fig. 8(a) is a control instruction format in accordance a second embodiment of the present invention;

Fig. 8(b) is a conditional jump (branch) instruction format in accordance with a second embodiment of the present invention; and

Fig. 9, 10 and 11 are block diagrams of a part of a data processor according to a second embodiment of the present invention.

## Detailed description of the prior art

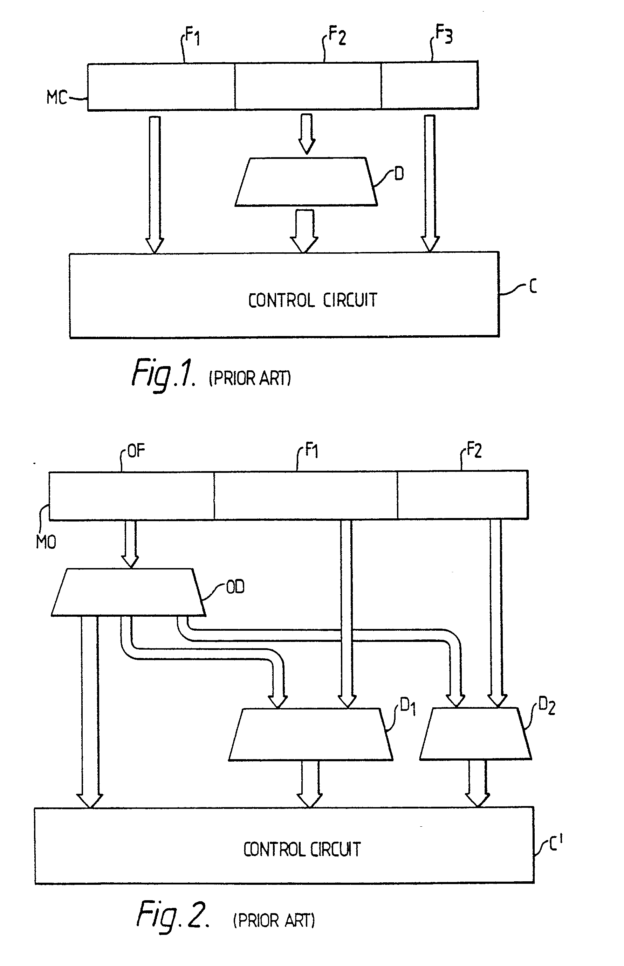

Fig. 1 shows a partial block diagram of a prior art information processor with horizontal type microprogramming, in which an instruction register, a decoder and a control circuit are included. In this figure, a one word micro instruction register, in which a plurality of micro codes MC are loaded after being read out of a memory (not shown), has three fields $F_1$, $F_2$ and $F_3$. A plurality of bit locations is assigned to each field. The fields $F_1$ and $F_3$ are directly connected to a control circuit C, while the field $F_2$ is coupled to the control circuit C via a decoder D. The control circuit is generally coupled to a processing portion (not shown), such as an arithmetic circuit and a data transfer circuit, and a processing flow control portion (not shown) for controlling a sequence of a processing flow. Micro codes in the fields $F_1$ and $F_3$ are directly applied to the control circuit C, while a micro code in the field $F_2$ is applied to the decoder D. Thereafter ta decoded output is transferred to the control circuit C. That is, each field controls the control circuit C independently.

In the horizontal microprogramming, since a number of control gates in the control circuit C is almost equal to a number of bits in the instruction register, the control circuit C can inmediately respond to each micro code, and therefore the processing portion and the processing flow control portion controlled by outputs of the control circuit C can execute a program at a high speed. However, since a large number of control gates is required by a high class computer, the length of a one word instruction becomes very long. Therefore this type of microprogramming is of little practical use.

On the other hand, a vertical type microprogramming is an improvement which does not have the abovementioned short coming of horizontal type microprogramming. Figure 2 shows a block diagram of a prior art vertical type microprogramming having a one word instruction register, decoders and a control circuit C'. The one word instruction register has three fields OF, $F_1$ and $F_2$, similar to the horizontal type microprogramming. However, an operation code for designating the operation of an instruction loaded into the register is set in the field OF, and operands are set into the fields $F_1$ and $F_2$, respectively. Each field is connected to a respective decoder. An operation code decoder OD connected to the operation field OF is connected to the control circuit C' and two decoders $D_1$ and $D_2$. The decoders $D_1$ and $D_2$ receive operands set in operand fields $F_1$ and $F_2$ and a part of the decoded output from the operation decoder OD, respectively, and the decoded outputs of the decoders $D_1$ and $D_2$ are applied to the control circuit C'. Thus the operands are decoded together with the result of the operation code decoding. Therefore, the same program as is used for the horizontal type can be executed by a number of bits less than that of the horizontal type. However, since a plurality of decoding steps (two steps in Fig. 2) are required, the vertical type of microprogramming has a shortcoming in that the processing speed is reduced.

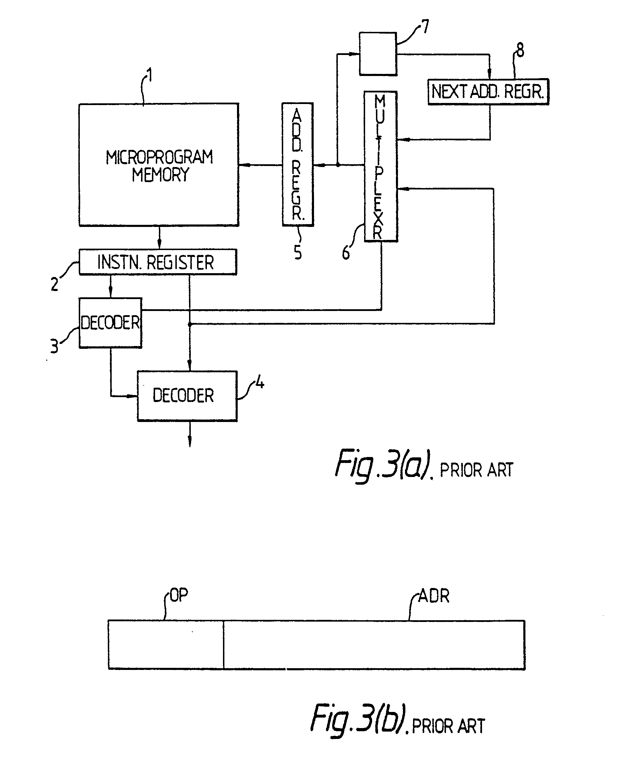

This shortcomong is better explained by an example employing a jump instruction. The jump instruction is one of the micro instructions and is used to change a sequence of a processing flow. This instruction is generally used in the processing flow control portion and not in the processing portion. Fig. 3(a) shows a block diagram of a part of a data processor having vertical type microprogramming. The jump instruction is stored in a microprogram memory together with other micro instructions. An address portion of this memory 1 is coupled to an address register 5, and a data portion of the memory is coupled to an instruction register 2 which can load a one word instruction. The register 2 and two decoders 3 and 4 are represented by the circuits shown in Fig. 2. The decoder 3 is coupled to an operation field of the register 2 and the decoder 4 is coupled to an operand field of the register 2. The control circuit C in Fig. 2 is omitted from Fig. 3. An input portion of the address register 5 is coupled to a multiplexer 6, which receives two kinds of address from a next address register 8 and the operand field of the instructions register 2. Sequential addresses are produced by an incrementer and are sent to one input portion of the multiplexer 6 via the next address register 8, while a jumping address is loaded in the operand field of the instruction register 2 and is transferred to the other input portion of the multiplexer 6.

Fig. 3(b) shows a jump instruction code format of the prior art. The jump instruction, which has two micro codes, one of which is a jump operation code in an operation code field and the other of which is a jumping address in two operand fields, is loaded into the instruction register 2 according to an address of the next address register 8.

Under the control of a normal code using sequential addresses, when the jump instruction shown in Fig. 3(b) is read out of the memory and is loaded into the instruction register 2, the decoder 3 decodes the jump operation code of the operation field and produces a jump operation signal. As a result, the normal mode is shifted to a jump mode. The operation signal is sent to the multiplexer 6 and is used as an exchange signal to exchange a next address to a jumping address. Also, the decoder 3 inhibits a decoding operating of the decoder 4. Therefore, the jumping address in the operand fields is set to the address register through the multiplexer 6, and is not decoded in the decoder 4. At the next step, the memory 1 is accessed by the jumping address in the address register 5.

As described above, the jumping address cannot be set to the address register 5 before the jumping operation code is decoded by the decoder 3 in the machine cycle in which the jumping address is loaded in the instruction register 2. The jumping address is set in the address register 5 after the decoding step and the multiplexing step. Therefore, the jump instruction cycle is very long; furthermore no other micro instruction for controlling a processing portion can be executed in the jump instruction cycle.

Fig. 4 shows a block diagram of a part of another data processor of the proir art. This figure includes a processing flow control circuit 15 for controlling a sequence of a processing flow, and a processing circuit 16 for executing an arithmetic operation and a data transfer operation. The processing flow control circuit 15 and the processing circuit 16 are coupled to a micro instruction decoder 11 and are controlled by decoded output signals. Though the micro instruction decoder 11 is shown as a black box, it may include a plurality of decoders as shown in Fig. 3(a). This decoder 11 decodes an operation code and an operand code and applies the necessary signals to the processing flow control circuit 15 and the processing circuit 16. Other elements, that is a microprogram memory 9, a micro instruction register 10, an address register 12, a multiplexer 13 and a next address register 14 are the same circuitry as the respective elements shown in Fig. 3(a). However, it is noted that the multiplexer 13 is controlled by the processing flow control circuit 15. The decoded signal is used directly as a processing flow control signal in Fig. 3(a), while a processing flow control signal is transferred through the processing flow control circuit, according to the decoded output in Fig. 4.

Fig. 5 shows micro instruction formats of vertical type microprogramming, in which (a) shows a control instruction format for controlling the processing circuit 16 and (b) shows a jump instruction format used in the processing flow control circuit 15. The control instruction has an operation code field in which an operation code for designating an operation of an arithmetic portion, or a data transfer portion, such as a peripheral interface circuit, is set and an operand field in which an operand used in the arithmetic portion, or the data transfer portion, is set. The jump instruction has an operation code field in which a jump operation code is set and an operand field in which a jumping address is set.

In the normal mode of operation, sequential addresses are set in the address register 12 at each machine cycle through the multiplexer 13. During this mode, when the instruction of Fig. 5(a) is accessed and loaded into the micro instruction register 10, the decoder 11 decodes an operation code and an operand code. The processing circuit 16 receives decoded signals and an operand and executes an operation designated by the decoded signals by using the operand. In this period, the processing flow control circuit 15 may be actuated by the decoded signals. A next address is set in the address register 12 within this control instruction cycle.

When the jump instruction of Fig. 5(b) is accessed by the next address, the jump operation code and the jumping address are simultaneously loaded in the instruction register 10. When this state is reached, the decoder 11 decodes the jump operation code and produces a jump operation control signal and a control signal to transfer the jumping address to the multiplexer 13. The jump operation control signal is applied to the multiplexer 13 through the flow control circuit 15 and selects the jumping address. Thereafter, the jumping address is set in the address register 12. Then the normal mode is changed to a jump mode. As described above, the processor in Fig. 4 also has the same shortcoming in that the jump instruction executing speed is comparatively low, as in the processor of Fig. 3(a). Furthermore, the microprogramming arrangement described requires three steps in the execution of each micro instruction; that is a reading step, a decoding step and an execution step. These three steps are also required for the jump instruction. However, in spite of the fact that the jump instruction is used only in the processing flow control circuit, the processing unit executes no operation in this cycle. That is, the processing circuit 16 cannot execute a control instruction and is held in an idle state. Therefore the processing efficiency of the processing circuit is comparatively poor.

Detailed description of the preferred embodiments

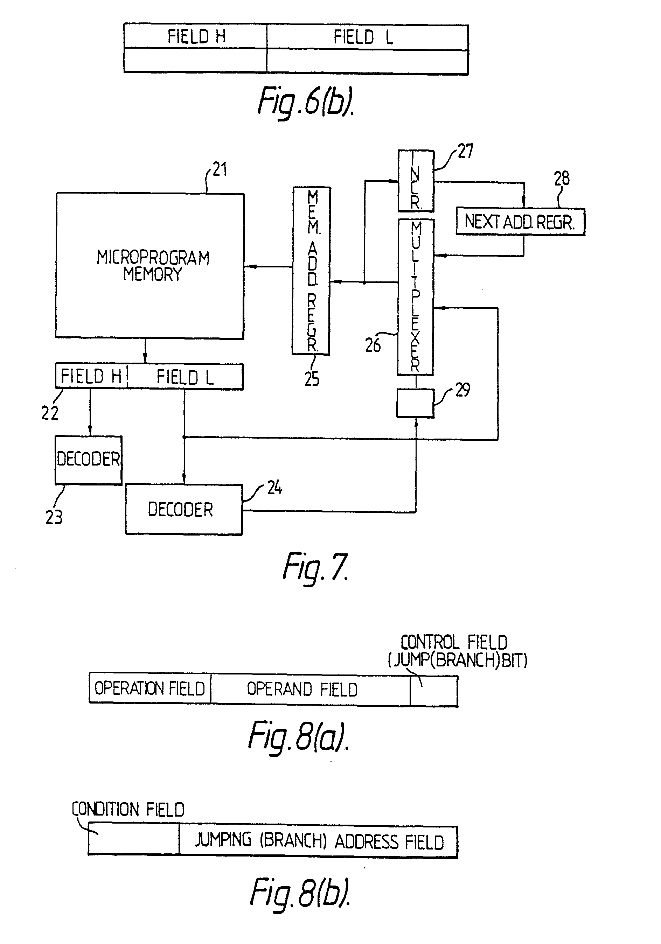

Fig. 6 shows instruction formats employed in the present invention, in which (a) shows a control instruction (a normal instruction) for controlling a processing circuit, such as an arithmetic circuit and a data transfer circuit, and (b) shows a jump instruction used in a processing flow control circuit for controlling the sequence of a processing flow. In this figure, the control instruction and the jump instruction having two fields, that is a higher field H and a lower field L, are shown as one example. The respective instruction may have more than two fields. A first operation code is set in the field H of the control instruction of Fig. 6(a), and a second operation code is set in the field H of the jump instruction of Fig. 6(b). The first and second operation codes designate operations of the processing circuit and may be the same operation code, for example a timing control code for input data applied to the processor from an external machine at a high speed. That is, the operation codes for controlling the processing circuit are set in the two fields H. A BR bit in the field L of the control instruction is used to designate the fact that a micro code set in the field L is another instruction, which is to be read out of a microprogram memory at the next step and is a jumping (or branch) address. For example, when the BR bit is "1", a micro code in the field L of the next micro instruction is a jumping (or branch) address, while the BR bit is "0", the micro code in the field L of the next micro instruction is not a jumping (branch) address, but another operation code or an operand code. The field L except for the BR bit of the control instruction is used as a location to set a code for designating a kind of arithmetic operation or a code for selecting a register. In the arrangement being described, the jump (or a branch) instruction is divided into two parts, one of which is a jump (branch) operation part and the other is a jumping (branch) address part, and the jump (branch) operation part is set in the BR bit of a preceding micro instruction, while the jumping (branch) address part is set in a field L of a following micro instruction.

Fig. 7 shows a principal block diagram of a first embodiment of the present invention. The micro instructions shown in Fig. 6 are stored on a microprogram memory 21, together with other micro instructions and are read out of the memory 21 according to addresses in a memory address register 25. A one word micro instruction register 22 is coupled to an output portion of the memory 21, and a read out one word instruction is loaded into the register 22. This register 22 includes two fields H and L in which the field H corresponds to the field H of a micro instruction and the field L corresponds to the field L of the micro instruction. The field H of the register 22 is coupled to a decoder 23 for decoding a control operation code, while the field L of the register 22 is coupled to a decoder 24 and to one input portion of a multiplexer 26. The other input portion of the multiplexer 26 is coupled to a next address register 28 storing a sequential address produced by an incrementer 27. The decoder 24 decodes the BR bit of a control instruction shown in Fig. 6(a). When the BR bit is "1", the decoder 24 produces a jump (branch) operation signal and transfers the jump (branch) operation signal to a flag register 29. The flag register 29 may be a flip-flop. The flag register 29 is set in response to the jump (branch) operation signal and sends an exchange signal to the multiplexer 26. The

**0 107 952**

multiplexer 26 selects the jumping (branch) address in the field L of the register 22. While, when the BR bit is "0", the decoder 26 resets the flag register 29.

A sequence of the processor in Fig. 7 will be described below.

In a normal mode of operation, an address from the next address register 28 is sent to the address register 25 through the multiplexer 26. The memory 21 is accessed by this address and transfers the accessed instruction to the instruction register 22. The instruction is loaded into the register 22 and an operation code of the field H is decoded by the decoder 23, while a BR bit and the remainder bits are decoded by the decoder 24. The decoder 23 produces an operation control signal and applies this signal to a processing circuit (not shown) and/or to the decoder 24. The processing circuit executes an instruction according to the operation control signal. In this case, the processing circuit may use the remainder bits in the field L. At the same time, the decoder 24 decodes the BR bit and produces the jump (branch) operation signal, when the BR bit is "1", and the reset signal for resetting the flag register 29, when the BR bit is "0". In this period, the address used to access this instruction is incremented by the incrementer 27 and a next address is set into the next address register 28.

In a following step, the next address is set into the address reigster 25 and a next micro instruction, shown in Fig. 6(b), is loaded into the instruction register 22. In this condition, when the flag register 29 is set at the preceding instruction cycle, a decoding operation of the decoder 24 is inhibited, and then a jumping (branch) address of the field L is sent to the address register 25 through the multiplexer 26. Meanwhile, the decoder 23 decodes an operation code of the field H in Fig. 6(b) and produces an operating signal. Therefore, the processing circuit executes a given operation in parallel during the same cycle. That is, an operation of the processing circuit and an operation of the processing flow control circuit (the decoder 24, the multiplexer 26 and the address register 25), can be executed with an overlap. The flag register 29 may be cleared after the jumping address is set in the address register 25.

As described above, in the particular embodiment, since a part of the preceding instruction decides that a jumping (branch) address of the following instruction be sent to the address register 25, and the selection of the multiplexer 26 is also completed, the decoding time for a jump operation is not required in the following instruction cycle in which a jumping address is loaded into the instruction register 22. Further, another instruction can be executed by a processing circuit at the same time as the jumping address is set into the address register.

Moreover, a jumping (branch) address portion occupies a large area in a word instruction code, so that a one word instruction code length becomes long in the prior art instruction format.

On the other hand, since a jump (branch) operation code and a jumping (branch) address are set independently in the preceding instruction field and the following instruction field irrespectively, in the present arrangement, the length of the one word instruction code can be reduced.

Furthermore, the BR bit may be more than one bit, and the jump (branch) operation code and the jumping (branch) address may be set in an arbitrary field of an instruction format.

Fig. 8 shows another instruction format employed in the present invention, in which (a) shows a preceding control instruction which includes an operation field, an operand field and a jump (branch) bit, and (b) shows a following instruction which includes a condition field and a jumping (branch) address field. The operation field of Fig. 8(a) is used to set an operation code for deciding the operation of an operand set in the operand field of Fig. 8(a). An operand set in the operand field designates a kind of an arithmetic operation or controls a control gate. The jump (branch) bit designates whether a following instruction is a jump (branch) instruction or not. The condition field of the conditional jump (branch) instruction of Fig. 8(b) is used to set a condition code for deciding a jump (branch) condition, and the jump (branch) address field is used to set a jumping (branch) address for designating an address to be jumped (branched) when the jump condition is satisfied.

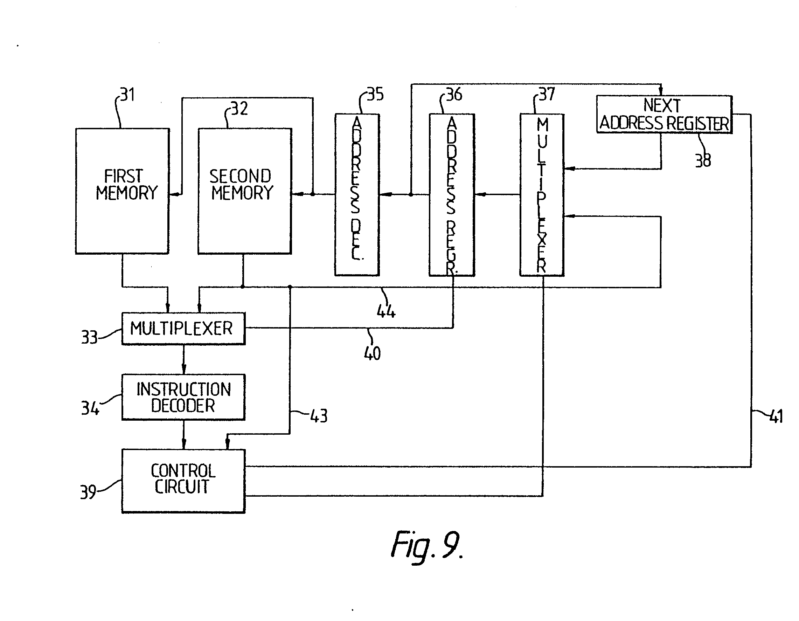

Fig. 9 is a principal block diagram of another embodiment of the present invention for executing the instructions shown in Fig. 8. A microprogram memory unit has two memories, that is a first memory 31 accessed by even number addresses and a second memory 32 accessed by odd number addresses. These two memories are commonly accessed by an address decoder 35 and coupled to a micro instruction multiplexer 33. A micro instruction of the memories is transferred through the multiplexer 33 to a micro instruction decoder 34. A control circuit 39 receives a decoded output from the decoder 34 and a micro code directly from the second memory 32. Therefore, the second memory 32 is coupled to both the multiplexer 33 and the control circuit 39. The control circuit 39 includes a processing flow control portion and a processing portion. An input of the address decoder 35 is coupled to an output portion of an address register 36 to which a next address in the sequential process and a jumping address are sent through an address multiplexer 37. The next address is produced by a next address register 38, while the jumping address is sent from the second memory 32. An LSB bit of the address register 36 is applied to the micro instruction multiplexer 33, and, therefore, an address, without the LSB bit is transferred to the address decoder 35. Consequently, a micro code at the 2N address of the first memory 31 and a micro code at the 2n+1 address of the second memory 32 are simultaneously read out of the two memories 31 and 32. The multiplexer 33 selects one of the two micro codes according to the LSB bit. When the LSB bit is "0", a micro code of the first memory is selected. A micro code of the second memory is selected when the LSB bit is "1". The content of the next address register is incremented by 1 or by 2 according to a control signal sent from the control circuit 39.

In this processor, a memory accessing means consists of the multiplexer 33, the address decoder 35 and the address register 36. An instruction selecting control means consists of the micro instruction decoder 34, the address multiplexer 37, the next address register 38 and the control circuit 39. Furthermore, a jump (branch) instruction shown in Fig. 8(b) is stored in the second memory 32 accessed by an odd number address.

In the normal mode of operation, an address of the next address register 38 is set in the address register 36 through the multiplexer 37, and is decoded by the decoder 35. The address decoder 35 decodes the address, except for the LSB bit 40, and simultaneously reads two instructions out of the first and second memories 31 and 32. That is, a micro instruction is read out of the first memory 31 which corresponds to a first instruction, while a micro instruction is read out of the second memory 32 which corresponds to a following instruction. These two micro instructions are selected in the multiplexer 33, according to the content of the LSB bit transmitted to the multiplexer 33 along the line 40. As described above, when the LSB bit is "0", a micro instruction of the first memory 31 is selected, while, when the LSB bit is "1", a micro instruction of the second memory 32 is selected. A selected micro instruction is decoded by the instruction decoder 34 and applied to the control circuit 39.

As a result of the decoding, when the jump bit of Fig. 8(a) is "0", the content of the next address register 38 is incremented by 1, according to the control signal 41 of the control circuit 39. Whilst, when the jump (branch) bit is "1", the decoder 34 determines that the simultaneously read out micro instruction of the second memory 32 appearing on the line 43 is a jump instruction. Therefore, the condition field of Fig. 8(b) is received into the control circuit 39 in response to a decoded output signal. As a result, the control circuit 39 receives two micro instructions, shown in Fig. 8(a) and (b), in the same cycle. The control circuit detects whether the jump (branch) condition in the condition field of Fig. 8(b) is satisfied or not, by the use of the result of the decoding of the operation code of the operation field of Fig. 8(a). If the condition is satisfied, the control circuit 39 produces an exchange signal which is sent to the multiplexer 37. Then, a jumping (branch) address 44 is selected by the multiplexer 37 and is set in the address register through the multiplexer 37. In addition, the control circuit 39 sends a control signal via line 41, for incrementing the next address register 38 by 2, to the next address register 38. Consequently, the jumping (branch) address is set in the address register, and thereafter a jump (branch) mode is sequentially executed.

In this embodiment, it is possible, by designating an even number address and an odd number address simultaneously to read two micro instructions out of the first and the second memories 31 and 32. When the micro instructions of the even number of address has a jump (branch) code, the instruction decoder 34 determines that the micro instruction of the odd number address is a jump (branch) instruction. Consequently, a condition code of the jump (branch) instruction is sent to the control circuit 39. The control circuit 39 establishes a jump condition until the execution of the micro instruction of the even number address has been finished, and it selects either a next address of the next address register 38, or a jumping (branch) address 44 of the jump (branch) address field by means of an exchange signal 42. Therefore, the two micro instructions shown in Figs. 8(a) and (b) can be executed with overlap and at high speed.

In this embodiment, since the jump (branch) instruction of Fig. 8(b) is stored only in the second memory 32, the design of the hardware is made very simple. However, it may be designed in such a way that an instruction of Fig. 8(a) is stored in the second memory while a jump instruction of Fig. 8(b) is stored in the first memory.

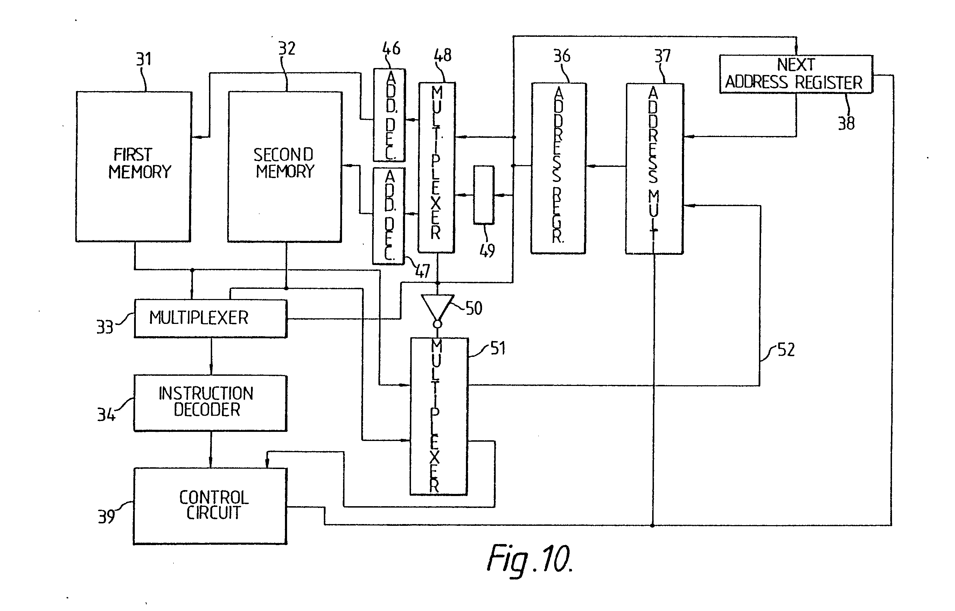

Furthermore, such limitation upon the memory can be lessened by the circuit design shown in Fig. 10. Fig. 10 includes two address decoders 46 and 47, which are coupled to the first memory 31 and the second memory 32, respectively, and two multiplexers 48 and 51. One input of the multiplexer 48 is directly coupled to the address register 36, and the other input portion of the multiplexer 48 is coupled to the address register 36 via an incrementer 49. The two input portions of the multiplexer 51 are coupled respectively to the first and second memories 31 and 32, and the two output portions of the multiplexer 51 are coupled to the address multiplexer 37 and the control circuit 39, respectively. The multiplexer 51 is used to select an instruction which is not selected by the multiplexer 33. The multiplexer 48 is used to send an odd number address to the address decoder 47 and to send an output of the incrementer 49 to the address decoder 46. However, when the address register 36 outputs an even number address, the multiplexer 48 sends this address to the address decoder 46 and an output of the incrementer 49 to the address decoder 47.

In this embodiment, a memory access control means consists of the multiplexers 33 and 48, the address decoders 46 and 47, the address register 36 and the incrementer 49. A memory select control means consists of the mirco instruction decoder 34, the multiplexers 37 and 51, the next address register 38, and the control circuit 39.

Now, it is assumed that the jump instruction is set in the first memory (even number) and a control instruction of the second memory (odd number) is executed. The control instruction is sent to the instruction decoder 34 through the multiplexer 33 and is decoded therein. The decoded outputs are sent to the control circuit 39. As a result of this decoding, when a jump (branch) bit is "0", the next address register 38 is incremented by one. While, when the jump (branch) bit is "1", the operation code and the operand code of the control instruction are sent to the control circuit. It is decided that a micro instruction selected by the multiplexer 51 is a jump instruction. The control circuit 39 detects whether a jump (branch) condition is satisfied or not. Then, the next address register 38 is incremented by 2. The multiplexer 37 selects and output (a jumping (branch) code 52) of the multiplexer 51. This jump (branch) instruction is processed until the preceding control instruction is finished.

It will be appreciated that in this embodiment, even if a jump instruction is set, in either the first memory 31 or the second memory 32, the jump instruction can be executed together with a preceding control instruction. Therefore, a high speed processing and a high processing efficiency can be established.

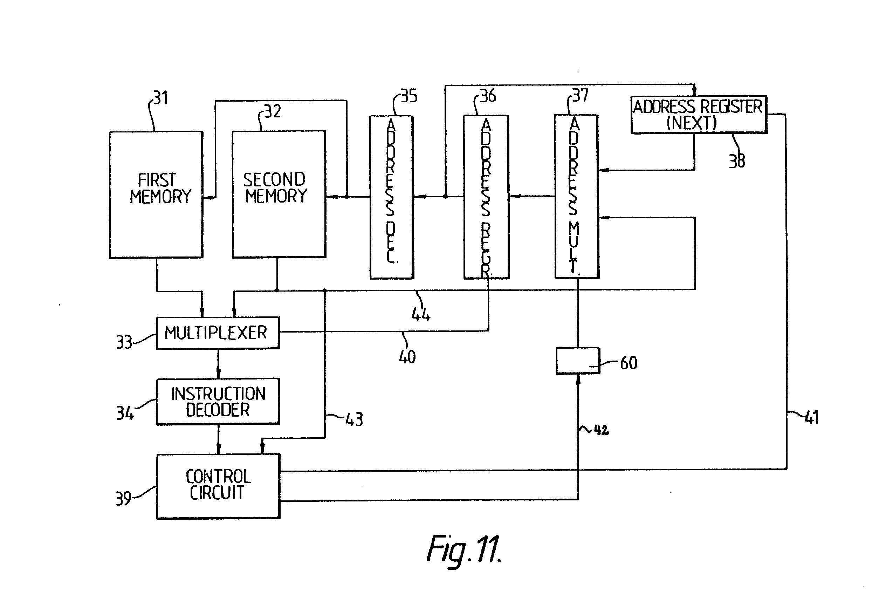

Referring to Fig. 11 there is shown another embodiment of the present invention in which a flag register 60 is added between the address multiplexer 37 and the control circuit 39 of Fig. 9. That is, this embodiment combines the arrangements of Figs. 7 and 9. The control circuit 39 sets "1" in the flag register 60, when a jump (branch) bit is "1". Then, the address multiplexer 37 selects a jumping (branch) address 44, while the next address register 38 is incremented by 2, according to a control signal 41. The flag register may be directly controlled by the decoder 34. In this embodiment also, since high speed processing and a high processing efficiency are obtained, the improvements which the invention aims to obtain are achieved.

**Claims**

1. An information processing apparatus comprising a processing circuit (16) for executing an arithmetic operation or a data transfer operation, a processing flow control circuit (15) for controlling the sequencing of the flow of a process, a microprogram memory (21) for storing a first type of instruction including an operation code field and an operand field and a second type of instruction including an operation code field and a field designating a jump address, a decoder (23, 24) coupled to said memory for decoding both types of instruction which are read out of said memory means (27, 28) for producing successive addresses and means (29) for transferring jump addresses both coupled to memory access means (25), via multiplexing means (26) characterised in

that the operand field (field L) of the first type of instruction includes a control field (BR) which indicates that the following instruction is of the second type, and

the said decoder (23, 24) decodes said control code to produce a jump operation signal which is used to inhibit said decoder from decoding the second field (field L) of the following instruction and instead said second field is sent as said jump address to said transferring means while at the same time said decoder decodes the first field (field H) of said following instruction to produce an operation control signal, corresponding to said first field (field H) of said second type of instruction.

2. An information processing apparatus comprising a processing circuit (16) for executing an arithmetic operation or a data transfer operation, a processing flow control circuit (15) for controlling the sequencing of the flow of a process, a microprogram memory (31, 32) for storing a first type of instruction including an operation code field and an operand field and a second type of instruction including a field designating a jump address, a decoder coupled to said memory for decoding the operation code field of instructions of the first type read out of said memory, means (38) for producing successive addresses and means (44; 51, 52) for transferring jump addresses both coupled to memory access means (35, 36) via multiplexing means (37) characterized in

that the operand field of the first type of instruction includes a control field which indicates that the following instruction is of the second type,

that two successive instructions are read out of said memory (31, 32) simultaneously and

that in the case where two successive microinstructions are of a different type, the operation code field and the control field of the first type of instruction are sent to a control circuit (39) via said decoder, said control circuit producing a control signal (42) to send said jump address to said transferring means.

**Patentansprüche**

1. Informationsverarbeitungsvorrichtung mit einer Verarbeitungsschaltung (16) zum Ausführen einer arithmetischen Operation oder einer Datenübertragungsoperation, einer Verarbeitungs-Flußsteuerungsschaltung (15) zum Steuern der Abfolge des Verfahrensflusses, einem Mikroprogrammspeicher (21) zum Speichern eines ersten Befehlstyps mit einem Operations-Codefeld und einem Operandenfeld und einem zweiten Befehlstyp mit einem Operations-Codefeld und einem Feld zum Angeben einer Sprungadresse, einem mit dem Speicher verbundenen Decodierer (23, 24) zum Decodieren beider Befehlstypen, die aus dem Speicher ausgelesen werdne, Einrichtungen (27, 28) zum Erzeugen aufeinanderfolgender Adressen und Einrichtungen (29) zum Übertragen der Sprungadressen, wobei beide über Multiplexereinrichtungen (26) mit Speicherzugriffeinrichtungen (25) verbunden sind, dadurch gekennzeichnet,

daß das Operandenfeld (Feld L) des ersten Befehlstyps ein Steuerfeld (BR) aufweist, das anzeigt, daß der folgende Befehl vom zweiten Typ ist, und

daß der Decodierer (23, 24) den Steuercode decodiert zum Erzeugen eines Sprungoperationssignals, das verwendet wird, um zu vermeiden, daß der Decodierer das zweite Feld (Feld L) des folgenden Befehls decodiert, und statt dessen wird das zweite Feld als die Sprungadresse an die Übertragungseinrichtungen gesendet,

während zur gleichen Zeit der Decodierer das erste Feld (Feld H) des folgenden Befehls decodiert zum Erzeugen eines Operationssteuersignals, das dem ersten Feld (Feld H) des zweiten Befehlstyps entspricht.

2. Informationsverarbeitungsvorrichtung mit einer Verarbeitungsschaltung (16) zum Ausführen einer arithmetischen Operation oder einer Datenübertragungsoperation, einer Verarbeitungs-Flußsteuerungsschaltung (15) zum Steuern der Abfolge des Verarbeitungsflusses, einem Mikroprogrammspeicher (31, 32) zum Speichern eines ersten Befehlstyps mit einem Operationscodefeld und einem Operandenfeld und einem zweiten Befehlstyp mit einem Feld zum Angeben einer Sprungadresse, einem mit dem Speicher verbundenen Decodierer zum Decodieren des Operationscodefeldes von Befehlen des ersten Typs, die aus dem Speicher ausgelesen werden, Einrichtungen (38) zum Erzeugen aufeinanderfolgender Adressen und Einrichtungen (44; 51, 52) zum Übertragen der Sprungadressen, wobei beide über Multiplexereinrichtungen (37) mit Speicherzugriffeinrichtungen (35, 36) verbunden sind, dadurch gekennzeichnet,

daß das Operandenfeld des ersten Befehlstyps ein Steuerfeld aufweist, das anzeigt, daß der folgende Befehl vom zweiten Typ ist,

daß zwei aufeinanderfolgende Befehle gleichzeitig aus dem Speicher (31, 32) ausgelesen werden und

daß in dem Fall, wenn beide aufeinanderfolgenden Mikrobefehle von unterschiedlichem Typ sind, das Operationscodefeld und das Steuerfeld des ersten Befehlstyps über den Decodierer zu einer Steuerschaltung (39) gesendet werden, wobei die Steuerschaltung ein Steuersignal (42) erzeugt, wodurch die Sprungadresse an die Übertragungseinrichtungen gesendet wird.

**Revendications**

1. Appareil de traitement de l'information comprenant un circuit de traitement (16) pour exécuter une opération arithmétique ou une opération de transfert de données, un circuit (15) de commande du déroulement du traitement pour commander le séquencement du déroulement d'un traitement, une mémoire (21) de microprogramme pour stocker un premier type d'instruction comportant une zone du code opération et une zone d'opérande et un second type d'instruction comprenant une zone du code opération et une zone désignant une adresse de saut, un décodeur (23, 24) couplé à la mémoire pour décoder deux types d'instruction qui sont lus dans la mémoire, un moyen (27, 28) pour produire des adresses successives, et un moyen (29) pour transférer des adresses de saut, tous deux couplés à un moyen (25) d'accès en mémoire via un moyen de multiplexage (26), caractérisé en ce que:

la zone opérande (zone L) du premier type d'instruction comprend une zone de commande (BR) qui indique que l'instruction suivante est du second type, et

le décodeur (23, 24) décode le code de commande pour produire un signal d'opération de saut qui est utilisé pour empêcher le décodeur de procéder au décodage de la seconde zone (zone L) de l'instruction suivante et au lieu de cela la seconde zone est envoyée comme l'adresse de saut au moyen de transfert;

alors qu'en même temps le décodeur décode la première zone (zone H) de l'instruction suivante pour produire un signal de commande d'opération, correspondant à la première zone (zone H) du second type d'instruction.

2. Appareil de traitement de l'information comprenant un circuit de traitement (16) pour exécuter une opération arithmétique ou une opération de transfert de données, un circuit (15) de commande du déroulement de traitement pour commander le séquencement du déroulement d'un traitement, une mémoire de microprogramme (31, 32) pour stocker un premier type d'instruction comprenant une zone du code opération et une zone d'opérande et un second type d'instruction comportant une zone désignant une adresse de saut, un décodeur couplé à la mémoire pour décoder la zone du code opération d'instructions du premier type lue dans la mémoire, un moyen (38) pour produire des adresses successives et un moyen (44; 51, 52) pour transférer des adresses de saut, tous deux couplés à un moyen d'accès en mémoire (35, 36) via un moyen de multiplexage (37), caractérisé en ce que:

la zone opérande du premier type d'instruction comporte une zone de commande qui indique que l'instruction suivante est du second type;

deux instructions successives sont extraites simultanément de la mémoire (31, 32); et

dans le cas où deux micro-instructions successives sont d'un type différent, la zone du code opération et la zone de commande du premier type d'instruction sont envoyées à un circuit de commande (39) via le décodeur, le circuit de commande produisant un signal de commande (42) pour envoyer l'adresse de saut au moyen de transfert.

**0 107 952**

Fig.1. (PRIOR ART)

Fig.2. (PRIOR ART)

1

Fig.3(a). PRIOR ART

Fig.3(b). PRIOR ART

0 107 952

*Fig .4.* PRIOR ART

| OPERATION CODE FIELD | OPERAND FIELD |
|---|---|

*Fig.5(a).* PRIOR ART

| OPERATION CODE FIELD | OPERAND FIELD |
|---|---|

*Fig.5(b).* PRIOR ART

| FIELD H | FIELD L |
|---|---|
| | BR |

*Fig.(6)a.*

3

| FIELD H | FIELD L |
|---------|---------|
|         |         |

*Fig.6(b).*

*Fig.7.*

CONTROL FIELD
(JUMP(BRANCH)BIT)

| OPERATION FIELD | OPERAND FIELD | |
|-----------------|---------------|---|

*Fig.8(a).*

CONDITION FIELD

| | JUMPING (BRANCH) ADDRESS FIELD |
|---|-------------------------------|

*Fig.8(b).*

Fig.9.

0 107 952

FIRST MEMORY

SECOND MEMORY

ADD. DEC.

ADD. DEC.

MULTIPLEXER

ADDRESS REGR.

ADDRESS MU+

NEXT ADDRESS REGISTER

31 32 46 48 36 37

38

47 49

MULTIPLEXER

33

INSTRUCTION DECODER

34

50

MULTIPLEXER

51

52

CONTROL CIRCUIT

39

*Fig.10.*

Fig.11.

0 107 952